Europäisches Patentamt

European Patent Office

Office européen des brevets

(11) Numéro de publication: **0 200 578**

**A1**

## (12) DEMANDE DE BREVET EUROPEEN

(21) Numéro de dépôt: **86400472.6**

(22) Date de dépôt: **06.03.86**

(51) Int. Cl.⁴: **A 01 B 35/18**
**A 01 B 49/02**

(30) Priorité: **06.03.85 FR 8503400**

(43) Date de publication de la demande:
**05.11.86 Bulletin 86/45**

(84) Etats contractants désignés:
**BE DE FR GB IT NL SE**

(71) Demandeur: **KONGSKILDE KONCERNSELSKAB A/S
No. 64 Skaelskorvej Lynge-Eskildstrup
DK-4180 Soro(DK)**

(72) Inventeur: **Sarazin, Guy
Chaumontagne
F-08220 Chaumont-Porcien(FR)**

(74) Mandataire: **Lepeudry-Gautherat, Thérèse et al,
ARMENGAUD JEUNE CABINET LEPEUDRY 6, rue du Fg.
St-Honoré
F-75008 Paris(FR)**

(54) Instrument combiné de défrichage et d'ameublissement du sol.

(57) Des roues à bêches (14) montées sur un arbre avant (9) se trouvent exactement en face de dents fixes (16) dont les extrémités pénètrent le sol en arrière de l'arbre avant (9) et dans la zone de travail des roues dentées (15) munies de couteaux (25, 27) montées sur l'arbre arrière (10).

EP 0 200 578 A1

FIG. 1

L'invention qui se situe dans le domaine des outils aratoires concerne plus précisément un instrument combiné de défrichage et d'ameublissement du sol pour sa préparation notamment en vue de l'ensemencement.

Actuellement, le défrichage et l'ameublissement du sol s'effectuent la plupart du temps en utilisant des moyens différents faisant appel à des systèmes rotatifs animés par l'engin tracteur. L'ensemencement est, quant à lui, effectué ultérieurement en utilisant d'autres moyens.

Pour assurer le défrichage on se sert de houes rotatives mues par la prise de force de tracteur, ou d'outils à disques ou encore d'outils munis de dents.

Pour assurer l'ameublissement du sol, on sait utiliser des herses rotatives également mues par la prise de force du tracteur ou des outils formés d'organes tournants montés sur un châssis et remorqués par le tracteur.

Il résulte de cette situation une grande disparité de matériels de travail du sol qui se traduit par des investissements assez lourds et par une consommation importante d'énergie, qui grèvent considérablement le prix de revient des travaux agricoles. En outre, l'obligation dans certains cas d'utiliser la prise de force du tracteur pour la mise en oeuvre des outils, entraîne des complications au niveau de l'attelage selon le type de matériel utilisé.

Pour éviter ces inconvénients on a déjà pensé à regrouper sur un même châssis un certain nombre d'instruments qui assurent le défrichage et l'ameublissement du sol, les instruments rotatifs étant entraînés non plus par des prises de force reliées au tracteur mais par leur mise en contact avec le sol.

C'est ainsi que l'on connaît un outil qui comporte deux rouleaux successifs accouplés par exemple par un entraînement par chaînes de telle sorte qu'ils aient des

2

vitesses superficielles relativement différentes lorsque l'un de ces rouleaux est mis en rotation quand il est en contact avec le sol, comme décrit dans le FR-A-2 302 009. Le châssis qui porte ces rouleaux est avantageusement muni d'une ou plusieurs herses formées de rangées de dents qui complètent le travail de la terre en avant ou en arrière desdits rouleaux. Les effets obtenus par ce type de matériel ne sont par conséquent que la somme des effets produits par chacun des instruments aratoires dont il dispose. On conçoit que ce type de matériel est en outre encombrant, lourd et de ce fait, d'un prix de revient et d'un coût d'exploitation élevés.

On sait également par le DE-A-3 314 761 combiner un rouleau équipé de bêches tournantes avec des rangées de dents placées de part et d'autre du rouleau lesquelles dents additionnent également leur effet d'ameublissement à celui assuré par le rouleau. On obtiendrait à l'aide de cet instrument une pulvérisation superficielle équivalente si les dents étaient plus éloignées de l'organe tournant, leur montage à proximité du rouleau n'étant assuré en l'occurence que pour limiter les dimensions et le poids du châssis porteur. Cet instrument sert donc à ameublir une terre déjà travaillée par des moyens de défrichage ou de déchaumage classiques.

L'invention évite ces inconvénients en proposant un outil qui non seulement réunit sur un même châssis de longueur restreinte, une pluralité d'instruments aratoires combinant des organes tournants et des dents fixes, mais qui par surcroît et du fait d'une disposition particulière desdits organes tournants par rapport notamment aux organes aratoires non tournants, assure un travail du sol bien supérieur à ceux fournis par les instruments connus et permet ainsi d'effectuer simultanément le défrichage. l'ameublissement et l'affinement du sol préparant directement le lit de semence. L'invention apporte en outre un avantage supplémentaire en ce qu'elle permet à l'utilisateur de cet instrument de régler indépendamment soit la profondeur de pénétration de l'organe fixe à dents qui assure principalement le décompactage, soit la profondeur de travail des organes tournants, soit les deux.

Un objet de la présente invention est donc de proposer un instrument combiné de défrichage et d'ameublissement du sol qui comporte des organes aratoires tournants pouvant s'enchevêtrer et montés sur deux arbres parallèles, solidaires en rotation et mus par le déplacement d'un châssis porteur et qui comporte donc une rangée de dents fixes, disposées de façon particulière. Selon une caractéristique principale de l'invention, l'organe aratoire tournant monté sur l'arbre avant est constitué de roues à bêches dont les bêches se trouvent exactement en face des dents fixes, c'est-à-dire que les dents fixes sont, selon l'axe de déplacement de l'instrument, exactement derrière les bêches dont les extrémités pénétrent le sol en arrière de l'arbre avant et dans la zone de travail de l'organe aratoire tournant monté sur l'arbre arrière, des moyens de réglage de pénétration des dents dans le sol, ainsi que des moyens de réglage de pénétration des deux organes aratoires tournants dans le sol étant liés au châssis et mis en oeuvre indépendamment.

Selon d'autres caractéristiques particulières de l'invention, les bêches en forme de palettes des roues à bêches ont leur plan parallèle à l'axe de l'arbre qui les supporte et sont orientées sensiblement tangentiellement aux génératrices dudit arbre.

D'autres caractéristiques et avantages de l'invention apparaîtront à la lecture de la description qui va suivre d'une forme de réalisation, prise à titre d'exemple non limitatif et en référence aux dessins annexés qui représentent :

- figure 1 une vue de côté de l'instrument combiné
- figure 2 une vue partielle et schématique en plan des organes aratoires tournants et fixe selon la figure 1.

4

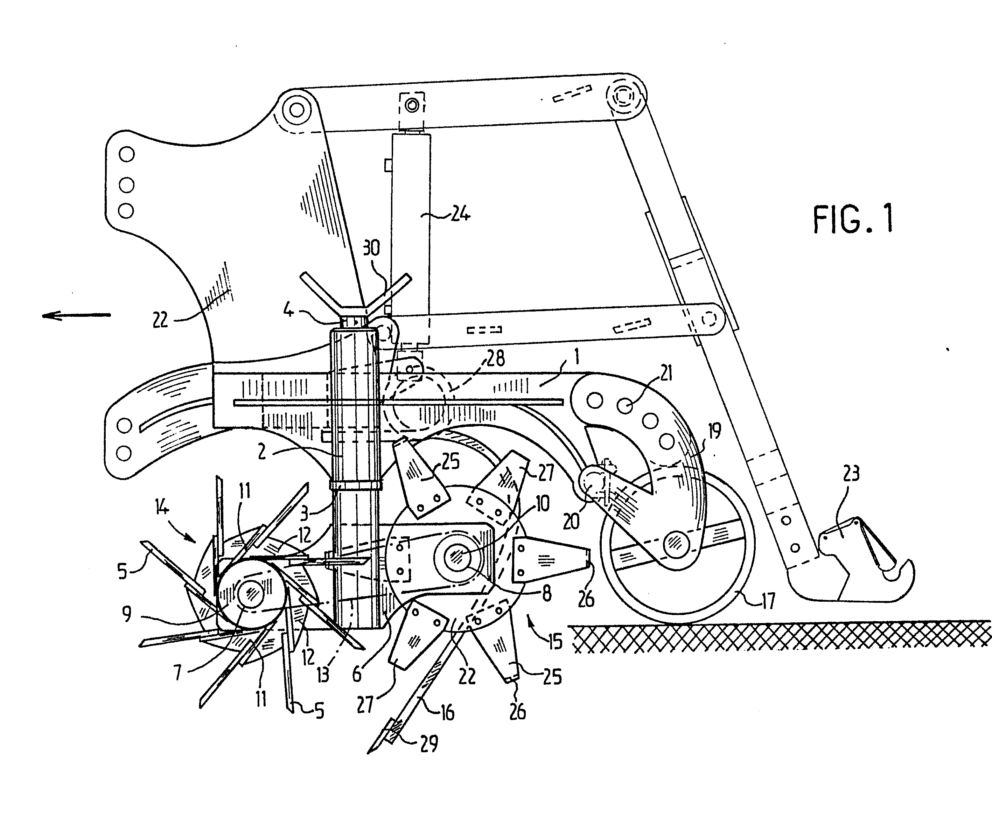

L'instrument combiné de défrichage et d'ameublissement du sol représenté à la figure 1 comprend essentiellement un châssis porteur 1 supportant par l'intermédiaire de fourreaux 2, de coulisseaux 3 et de systèmes vis et écrou 4 un support 6 se trouvant ainsi réglable en hauteur par une manivelle 30. Ce support 6 reçoit des paliers 7 et 8 dans lesquels sont montés respectivement des arbres 9 et 10 supportant des organes tournants. Les deux arbres portent des pignons solidarisés en rotation par une chaîne 13. Les pignons sont avantageusement de diamètres différents pour que les organes tournants montés sur l'arbre 10 tournent plus rapidement que ceux montés sur l'arbre 9. L'arbre 9 porte une série de roues 14 munies de bêches 5 en forme de palettes dont le plan est parallèle à l'axe de l'arbre 9. Les bêches sont fixées à des fers 11 soudés à l'arbre et sont orientées sensiblement tangentiellement aux génératrices dudit arbre. Des nervures de renforcement 12 sont en outre prévues entre chaque palette. L'arbre 10 porte une série de roues dentées 15 constituées d'un tambour 22 sur lequel sont fixés des couteaux 25 perpendiculaires à l'axe de l'arbre, et dont les extrémités 26 sont repliées selon un plan parallèle audit arbre et alternativement d'un côté et de l'autre du tambour. Deux couteaux opposés 27 plus courts que les couteaux 25 sont en outre intercalés sur le tambour et inclinés par rapport à l'axe de l'arbre.

Un certain nombre de dents fixes 16 sont fixées au châssis 1 et présentent la forme d'un arceau dont la partie supérieure fait retour selon une petite spirale 28 assurant son élasticité et dont l'extrémité-inférieure se termine par une lame d'attaque 29 orientée vers l'avant de l'instrument, dont l'angle d'attaque au sol est de l'ordre de 35 à 45°.

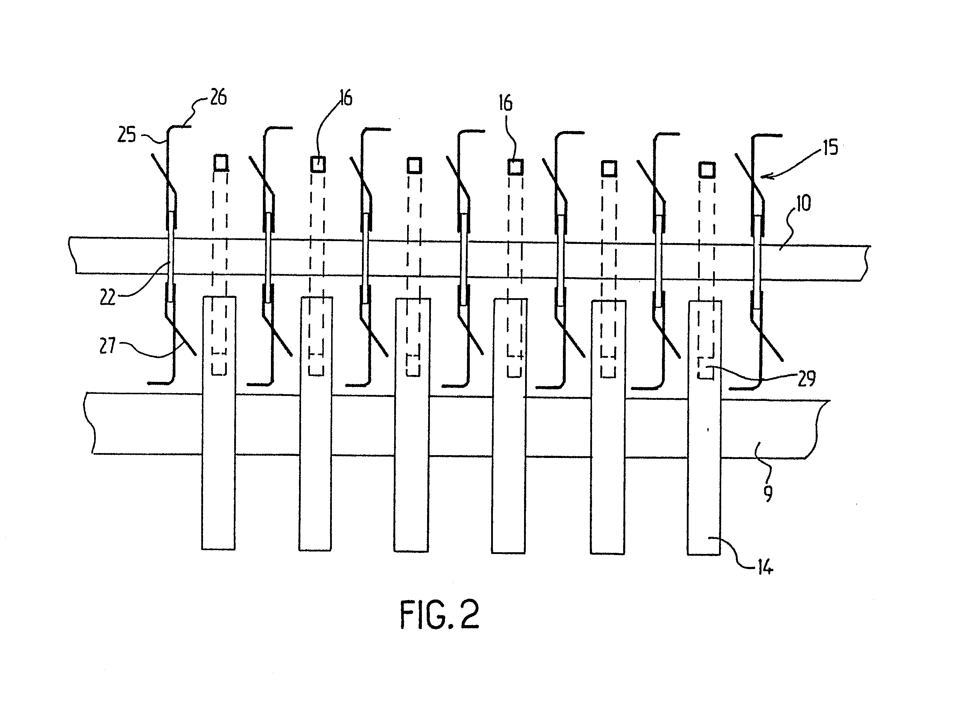

La position relative des roues 14 à bêches, des roues dentées 15 et des dents fixes 16 apparaît notamment à la figure 2. On y relève que les roues 14 à bêches et les roues dentées 15 se trouvent enchevêtrées, c'est-à-dire

5

qu'elles sont décalées longitudinalement les unes par rapport aux autres et qu'en outre chaque extrémité de l'organe tournant se trouve à proximité de l'arbre de l'organe tournant voisin. Quant aux dents fixes 16, elles sont exactement en face des roues à bêches 14, c'est-à-dire que selon l'axe de déplacement de l'instrument, elles sont exactement derrière les bêches. Leurs lames d'attaque 29 se trouvent au-dessous de la zone de travail des bêches 5 ou du moins entre les deux arbres 9 et 10. Elles attaquent le sol en arrière de l'arbre avant 9 et dans la zone de travail des roues dentées arrière 15, c'est-à-dire dans une zone horizontale correspondant au diamètre de ces roues dentées.

Un rouleau compacteur 17 réglable en hauteur par rapport au châssis 1 se trouve à l'arrière de l'instrument. Les extrémités de son axe sont montées sur une potence 19 pivotante autour de l'axe 20, dont le bras supérieur porte des orifices 21 venant en regard d'un orifice du châssis 1 et permettant à l'aide d'une butée de blocage de régler la hauteur du rouleau 17. Le châssis 1 est solidaire d'un organe d'attelage 22 à un tracteur non représenté. Il supporte également un semoir 23 relevable par l'intermédiaire d'un vérin 24.

Avant la mise en fonctionnement, l'utilisateur règle la profondeur du défrichage ou du déchaumage en réglant la hauteur du rouleau compacteur 17 par rapport au châssis 1. Il dispose pour cela de butées de blocage qui seront introduites dans l'orifice 21 de son choix et dans l'orifice correspondant du châssis. Ce réglage en hauteur du châssis par rapport au sol revient à régler la profondeur de pénétration de la dent fixe 16. Le réglage de la profondeur du travail d'affinement est obtenu par action sur la manivelle 30, qui permet de relever plus ou moins le support 6 par rapport au châssis 1.

L'ensemble attelé au tracteur se déplace dans le sens indiqué par la flèche. Les roues à bêche 14, à l'avant, roulent sur le sol et entraînent par la chaîne 13

6

la rotation des roues dentées 15.

Chaque bêche élémentaire 5 des roues 14, du fait de son orientation parallèle à l'axe de l'arbre 9 décompacte la terre dont les mottes sont immédiatement reprises par les lames 29 des dents 16 qui se trouvent exactement en face des roues à bêches 14. Ces mottes sont ainsi soulevées, déjà au moins partiellement brisées par les bêches 5 et aussitôt reprises par les couteaux (25, 27) des roues dentées 15, qui tournent plus rapidement et pulvérisent les mottes. Le bourrage entre les dents est évité du fait de l'imbrication des éléments aratoires fixes et tournants. De plus, le débattement des bêches 5 et des couteaux 25 qui les fait passer tout près de l'arbre voisin contribue efficacement au décrottage desdits arbres.

Cet instrument se prête donc particulièrement bien à la préparation de tous les lits de semence, au déchaumage et au défrichage. C'est pourquoi il est équipé éventuellement à l'arrière d'un semoir relevable. Il peut être aussi utilisé pour le sous-solage et le malaxage des différentes couches de terrain notamment lors de la construction de routes.

7

## REVENDICATIONS

1°- Instrument combiné de défrichage et d'ameublissement du sol comportant des organes aratoires tournants (14, 15) pouvant s'enchevêtrer et montés sur deux arbres (9, 10) parallèles, solidaires en rotation et mus par le déplacement d'un chassis porteur (1), et comportant une rangée de dents fixes (16), caractérisé en ce que l'organe aratoire tournant (14) monté sur l'arbre avant (9) est constitué de roues à bêches dont les bêches (5) se trouvent exactement en face des dents fixes (16) selon l'axe de déplacement de l'instrument, en ce que les extrémités des dents fixes (16) pénètrent le sol en arrière de l'arbre avant (9) et dans la zone de travail de l'organe aratoire tournant (15) monté sur l'arbre arrière (10) et en ce que des moyens de réglage (17, 19) de pénétration des dents (16) dans le sol, ainsi que des moyens de réglage (3, 4) de pénétration des deux organes aratoires tournants (14, 15) dans le sol sont liés au châssis (1) et mis en œuvre indépendamment.

2°- Instrument selon la revendication 1, caractérisé en ce que les roues (14) sont munies de bêches (5) en forme de palettes dont le plan est parallèle à l'axe de l'arbre (9).

3°- Instrument selon la revendication 2, caractérisé en ce que les bêches (5) sont orientées sensiblement tangentiellement aux génératrices de l'arbre (9).

4°- Instrument selon la revendication 1, caractérisé en ce que l'organe aratoire tournant (15) monté sur l'arbre arrière (10) est constitué d'une série de roues dentées (15) portant des couteaux (25, 27) perpendiculaires à l'axe de l'arbre (10).

5°- Instrument selon la revendication 4, caractérisé en ce que les extrémités (26) des couteaux (25) sont repliées selon un plan parallèle audit arbre et alternativement d'un côté et de l'autre du tambour.

6°- Instrument selon la revendication 4, caractérisé en ce que deux couteaux opposés (27) plus courts que les couteaux (25) sont intercalés entre ces derniers.

7°- Instrument selon la revendication 1, caractérisé en ce que les dents fixes sont munies à leur extrémité d'une lame (29) orientée vers l'avant et attaquant le sol selon un angle d'attaque de 35° à 45°.

8°- Instrument selon la revendication 1, caractérisé en ce que les extrémités des bêches tournantes (5) passent à proximité de l'arbre (10) portant les roues dentées (15), et les extrémités des couteaux tournants (25) passent à proximité de l'arbre (9) portant les roues à bêches (14).

9°- Instrument selon la revendication 1, utilisant un rouleau compacteur (17), caractérisé en ce que les moyens de réglage de la pénétration des dents (16) dans le sol sont constitués par une potence (19) pivotante autour d'un axe (20) et portant des orifices (21) venant en regard d'un orifice fixe du chassis (1) pour régler la hauteur du châssis par rapport au rouleau compacteur (17).

10°- Instrument selon la revendication 1, utilisant des systèmes à coulisseaux (3), fourreaux (2) et vis écrou (4), caractérisé en ce que les moyens de réglage de la pénétration des organes aratoires tournants (14, 15) dans le sol à l'aide de ces systèmes agissent sur un support (6) commun aux deux arbres (9) et (10) desdits organes aratoires tournants.

0200578

FIG.1

FIG.2

# RAPPORT DE RECHERCHE EUROPEENNE

Numéro de la demande

Office européen
des brevets

EP 86 40 0472

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 123 265 (VAN DER LELY)<br><br>* Page 1, ligne 76 - page 3, ligne 35; figures 1,2 * | 1,2,7, 8,10 | A 01 B 35/18<br>A 01 B 49/02 |
| A | GB-A-2 007 071 (L. BIASOTTO)<br>* Page 2, ligne 112 - page 3, ligne 33; figures 1A,2A * | 1-5,10 | |
| A | US-A-3 151 683 (STECK) | | |
| A | GB-A-2 137 463 (MACHINEFABRIEK STEKETEE B.V.) | | |
| A | US-A-1 641 393 (MACKIE) | | DOMAINES TECHNIQUES RECHERCHES (Int. Cl.4) |
| A | FR-A-2 193 533 (VAN DER LELY)<br>* Page 3, lignes 15-20; figure 2 * | 9 | A 01 B<br>E 01 C |

- - - - -

Le présent rapport de recherche a été établi pour toutes les revendications

| Lieu de la recherche | Date d'achèvement de la recherche | Examinateur |
|---|---|---|
| LA HAYE | 05-06-1986 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82